(19)

Europäisches
Patentamt

European
Patent Office

Office européen
des brevets

(11) **EP 3 136 225 A1**

(12) **EUROPEAN PATENT APPLICATION**

(43) Date of publication:
**01.03.2017 Bulletin 2017/09**

(51) Int Cl.:
***G06F 7/72*** (2006.01)

(21) Application number: **15306320.1**

(22) Date of filing: **27.08.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **GEMALTO SA
92190 Meudon (FR)**

(72) Inventors:
• **HAMZI, Nabil
13881 GEMENOS CEDEX (FR)**
• **SINARDI, Guntur
13881 GEMENOS CEDEX (FR)**

(74) Representative: **Scheer, Luc et al
Gemalto SA
525, Avenue du Pic de Bertagne
CS 12023
13881 Gémenos Cedex (FR)**

(54) **METHOD FOR FAST MODULAR EXPONENTIATION 2C MOD N**

(57)    The present invention relates to a method to calculate modular exponentiation 2c mod n, said method comprising the steps of, xi referring to the value of i-th byte from the most significant byte of the exponent c (i = 1, ..., (|c|)/8):
- initializing (S0) an accumulator (ACC) with 1,
- looping on the following operations from the first byte (x1) until the last byte (x3):
- calculating (S2) modular square 8 times on the accumulator (ACC),
- shifting (S3) the current value on the accumulator (ACC) to the left xi times,
- applying (S3) modular reduction to the accumulator (ACC).

FIG.1

EP 3 136 225 A1

**Description**

## FIELD OF THE INVENTION

The present invention relates to a method to calculate modular exponentiation $2^c$ mod n. The invention also pertains to a device implementing said method.

## BACKGROUND OF THE INVENTION

Generation of RSA key requires the generation of prime numbers. This generation requires a primality test that is time consuming due to modular exponentiation routine. When the Fermat's primarity test is used, one of the operations to be performed is to raise an element (often 2) to the power of the prime number candidate minus 1, modulo prime number candidate.

Modular exponentiation is the core of the problem in terms of duration of the primarity test. Currently many ways of doing a modular exponentiation by squaring exist: right to left square and left to right square and multiply method, 2k-ary method, sliding window method, Montgomery's ladder technique.

Further alternative and advantageous solutions would, accordingly, be desirable in the art.

## SUMMARY OF THE INVENTION

The present invention aims at providing short time primarity test by proposing an original modular exponentiation method enabling to perform fast exponentiation.

The present invention is defined, in its broadest sense, as a method to calculate modular exponentiation $2^c$ mod n for use in a primarity test in a cryptographic key generation, said method comprising the steps of, xi refering to the value of i-th byte from the most significant byte of the exponent c (i = 1, ..., (|c|)/8):

- initializing an accumulator with 1,
- looping on the following operations from the first byte until the last byte:

    - calculating modular square 8 times on the accumulator,

- shifting the current value on the accumulator to the left xi times,

    - applying modular reduction to the accumulator,

- extracting the value as stored in the accumulator (ACC) for use in primarity test steps.

The invention focus on the computation of modular power of 2 for which the invention is faster than any other modular exponentiation method suitable to compute such result.

The computation is faster in comparison with the Square and Multiply previous method. With the invention, the analogue to multiplication part is done on every 8-bit instead of every time bit 1 is found.

With the invention, shifting operation, which is the analogue to multiplication in Square and Multiply, is capped to 255 times. The complexity of the modular exponentiation according to the invention is 1.125, whereas square and multiply has a complexity of 1.5. This low complexity was never reached while having a same amount of data as square and multiply.

In terms of security of the method against side channel attacks, each loop has the same set of operations, hence providing inherent countermeasure against timing or power analysis.

Furthermore, the invention implements temporary computation requiring relatively small space in terms of memory which is advantageous.

Indeed the way modular power is computed according to the invention is unique in the sense that the property of 2 is used as modular base. No pre-computation is used and none additional data need to be stored.

According to a specific implementation of the invention, the calculation using Montgomery form, said method comprises the steps of, before looping on steps from the second byte until the last byte, i referring to the current byte position:

- calculating $2^{x1}$ in Montgomery form, i.e.$(2^{x1} * R)$ mod n, R being the Montgomery constant,
- storing the result of the calculation into the accumulator (ACC),
- assuming $R = 2^{|n|}$ mod n is used in the Montgomery operation, $(2^{x1} * R)$ mod n is thus equal to $2^{x1+|n|}$ mod n,

- shifting bit 1 from less significant bits to the left ($x1+|n|$) times to obtain $2^{x1+|n|}$,
- apply modular reduction on it to obtain ($2^{x1} * R$) mod n,

and, after the looping on steps, the step of converting the result in the accumulator from Montgomery form to normal form.

The invention applied to the Montgomery form benefits from the advantages of the Montgomery calculation further reducing the computation duration.

The present invention also relates to a device implementing a method to execute a modular exponentiation as defined in the invention, said device comprising at least an accumulator, said device being characterized in that it further comprises:

- an initialization module intended to initialize accumulator; and
- a calculation module for, while i>0, looping on the following operations from the first byte until the last byte:

  - calculating modular square 8 times on the accumulator,
  - shifting the current value on the accumulator to the left xi times,
  - applying modular reduction to the accumulator.

Such a device enables to perform a modular exponentiation according to the method of the invention, i.e. combining a modular square 8 times and then a shift of the bits, which offers an unknown before fastness. Initialization and calculation modules are typically corresponding to computer programs implementing the steps of the method of the invention when executed on a computer. The accumulator is a register dedicated to the implementation of the invention in the memory of the computer on which the method of the invention is performed.

To the accomplishment of the foregoing and related ends, embodiments of the invention comprise the features hereinafter fully described and particularly pointed out in the claims.

## BRIEF DESCRIPTION OF THE DRAWINGS

The following description and the annexed drawing set forth in detail certain illustrative aspects and are indicative of but a few of the various ways in which the principles of the embodiments may be employed. Other advantages and novel features will become apparent from the following detailed description when considered in conjunction with the drawing and the disclosed embodiments are intended to include all such aspects and their equivalents.

- Figure 1 represents a schematic flowchart of an embodiment of the invention;
- Figure 2 gives an example of a step of shifting the bytes in an accumulator as defined in the invention;
- Figure 3 schematically shows a device of the invention.

## DETAILED DESCRIPTION OF EMBODIMENTS OF THE INVENTION

The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. For clarity, only those elements and steps which are useful to the understanding of the present invention have been shown in the drawings and will be described. When an action is said to be performed by a device, it is in fact executed by a microprocessor in this device controlled by instruction codes recorded in a program memory on the said device.

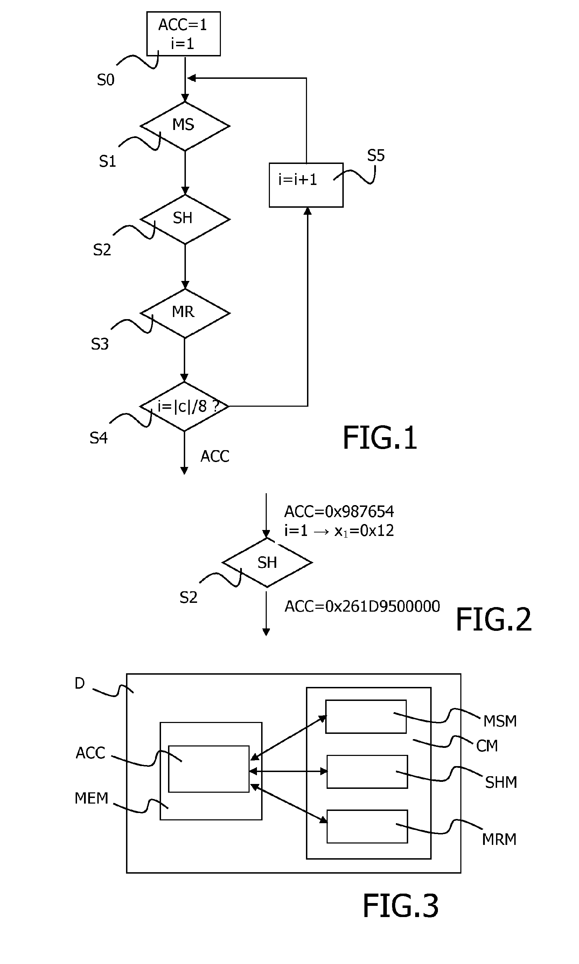

FIG. 1 schematically shows a flowchart of an embodiment of the invention for the calculation of the modular exponentiation $2^c$ mod n. On a first preliminary step S0, accumulator ACC is initialized with 1. Then, in a step S1, from the first byte to the last byte, starting by the most significant bytes of c, modular square MS is calculated 8 times on the accumulator ACC. The result of successive 8 modular squares is stored back into ACC.

In a step S2, the current value of accumulator ACC is then shifted SH $x_i$ times to the left, $x_i$ referring to the value of i-th byte from the most significant byte of the exponent c. i is thus comprised in the interval $[1,...,|c|/8]$, $|c|$ being the bit-length of the exponent c.

FIG. 2 shows an example of shifting step with an accumulator value ACC=0x987654 and an exponent value c=0x123456. The byte constitution of the exponent is thus such that x1 = 0x12, x2 = 0x34 and x3 = 0x56.

On figure 2 is shown the processing of the first byte of the exponent. 0x987654 is shifted 0x12=18 bits to the left, hence the result is 261D9500000. In a step S3, a modular reduction MR is applied on the accumulator ACC.

At last the value of i is tested as being or not equal to $|c|/8$. If not the index i is incremented to i+1 and steps S1 to S3 are applied to the accumulator ACC.

If the value is equal to |c|/8, the value of the accumulator ACC is output as the result of the modular exponentiation.

The method of the invention exploits the following original decomposition of an exponent e. This decomposition has never been used before in cryptography practical computing. It consists in decomposing the value e in power of $2^8$:

$$e = \Sigma\, e_i.2^{8i} = e_0 + e_1.2^8 + e_2.2^{16} + \ldots + e_n.2^{2n}.$$

Thus, for example, the hexadecimal value 0x362F5D is equal to $0x5D + 2^8.0x2F + 2^{16}.0x36$. The invention consists in a practical and resource convenient way of progressively computing the successive power of 2.

In the beginning of the first loop: ACC=1. After the 8 squares ACC = 1. Then the shift on the left leads to a value in the ACC=$2^{\wedge}m_n$. As the shift is a linear operation a modular reduction is necessary leading to ACC=$2^{\wedge}m_n$ mod n.

At the second loop, after the 8 square, the accumulator ACC=$2^{\wedge}(m_n.2^8)$. The shifting step leads to ACC=$2^{\wedge}(m_n.2^8).2^{\wedge}(m_{n-1})$. After a modular reduction, 8 squares are again applied in a third loop leading to ACC=$2^{\wedge}(m_n.2^{16})$ $2^{\wedge}(m_{n-1}.2^8)$. Step by step, more precisely bytes after bytes, the value as stored in ACC reaches the result of the modular exponentiation $2^e$ mod n.

Indeed in this step by step calculation, the 8 squares provide the $2^{\wedge}8$ and the shifting step provides the $2^{\wedge}e_i$ of the $2^e$ mod n calculation.

In the following is given details on the calculation of 2c mod n according to the invention in the case of the use of the Montgomery form. The Montgomery constant is noted R.

Modulus n and exponent c are first set. Then $2^{x1}$ is calculated in Montgomery form, i.e. $2^{x1}.R$ mod n and the result is stored in the accumulator ACC.

It is then assumed that R=$2^{|n|}$ mod n is used in the Montgomery operation, which is true for most cases. Hence, $2^{x1}$ R mod n is equal to $2^{x1+|n|}$ mod n and $2^{x1+|n|}$ can be obtained by shifting bit 1 from low significant bits to the left x1+|n| times. After modular reduction on the result, $2^{x1}$ R mod n is obtained.

Then the following set of operations is started and looped from the second byte until the last byte, i referring to the current byte position: Montgomery Square 8 times on the accumulator ACC and storage of the result into the accumulator ACC. The result in accumulator ACC is then copied to a temporary register and shifted to the left xi times. A modular reduction is applied on the temporary register and the result is stored by overwriting it into the accumulator ACC.

At last the result is converted in the accumulator ACC from Montgomery to normal form.

Figure 3 schematically shows a device D of the invention. This device D comprises at least an accumulator ACC part of a memory MEM and a calculation module, typically a processing unit, having sub modules able to implement the steps of the method of the invention.

The calculation module CM includes a modular square sub-module MSM, a shifting sub-module SHM and a modular reduction sub-module MRM working in interaction with the accumulator ACC to implement the steps of the invention.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled. Thus claims are to be understood to include what is specifically illustrated and described above, what is conceptually equivalent, what can be obviously substituted and also what essentially incorporates the essential idea of the invention.

**Claims**

1. Method to calculate modular exponentiation 2c mod n for use in a primarity test in a cryptographic key generation, said method comprising the steps of, xi referring to the value of i-th byte from the most significant byte of the exponent c (i =1, ..., (|c|)/8):

    - initializing (S0) an accumulator (ACC) with 1,
    - looping on the following operations from the first byte (x1) until the last byte (x3):

        - calculating (S2) modular square 8 times on the accumulator (ACC),
        - shifting (S3) the current value on the accumulator (ACC) to the left xi times,
        - applying (S3) modular reduction to the accumulator (ACC),

- extracting the value as stored in the accumulator (ACC) for use in primarity test steps.

2. Method according to claim 1, wherein, the calculation using Montgomery form, said method comprises the steps of, before looping on steps from the second byte until the last byte, i referring to the current byte position:

- calculating $2^{x1}$ in Montgomery form, i.e.$(2^{x1} * R)$ mod n, R being the Montgomery constant,
- storing the result of the calculation into the accumulator (ACC),
- assuming $R=2^{|n|}$ mod n is used in the Montgomery operation, $(2^{x1} * R)$ mod n is thus equal to $2^{x1+|n|}$ mod n,
- shifting bit 1 from less significant bits to the left $(x1+|n|)$ times to obtain $2^{x1+|n|}$,
- apply modular reduction on it to obtain $(2^{x1} * R)$ mod n,

and, after the looping on steps, the step of converting the result in the accumulator (ACC) from Montgomery form to normal form.

3. Device implementing a method to execute a modular exponentiation as defined in one of the previous claims, said device comprising at least an accumulator (ACC), said device being **characterized in that** it further comprises a calculation module (CM) for, while i>0, looping on the following operations from the first byte until the last byte:

- calculating (MSM) modular square 8 times on the accumulator (ACC),
- shifting (SHM) the current value on the accumulator (ACC) to the left xi times,
- applying (MRM) modular reduction to the accumulator (ACC).

FIG.1

FIG.2

FIG.3

Europäisches
Patentamt

European
Patent Office

Office européen
des brevets

# EUROPEAN SEARCH REPORT

Application Number

EP 15 30 6320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/294174 A1 (PULKUS JURGEN [DE]) 2 October 2014 (2014-10-02) * paragraph [0076] - paragraph [0110] * ----- | 1-3 | INV. G06F7/72 |
| A | Vinodh Gopal ET AL: "Fast and Constant-Time Implementation of Modular Exponentiation", 28th International Symposium on Reliable Distributed Systems, 1 January 2009 (2009-01-01), XP055250267, Retrieved from the Internet: URL:https://www.cse.buffalo.edu/srds2009/escs2009_submission_Gopal.pdf [retrieved on 2016-02-16] * Algorithm 2 * ----- | 1-3 | |

TECHNICAL FIELDS SEARCHED (IPC)

G06F

The present search report has been drawn up for all claims

| Place of search | Date of completion of the search | Examiner |
|---|---|---|
| Munich | 16 February 2016 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6320

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | Publication date |
|---|---|---|---|---|
| US 2014294174 | A1 | 02-10-2014 | CN 104025018 A<br>DE 102011117236 A1<br>EP 2771782 A1<br>US 2014294174 A1<br>WO 2013060467 A1 | 03-09-2014<br>02-05-2013<br>03-09-2014<br>02-10-2014<br>02-05-2013 |

EPO FORM P0459

For more details about this annex : see Official Journal of the European Patent Office, No. 12/82